# EUROPÄISCHE PATENTSCHRIFT

(11) **EP 2 486 892 B1**
(45) Veröffentlichungstag und Bekanntmachung des Hinweises auf die Patenterteilung: **02.09.2015**
(21) Anmeldenummer: 11154372.4
(22) Anmeldetag: 14.02.2011
(51) Int. Cl.: A61C 13/00

(54) **Verfahren zur Herstellung eines dentalen Restaurationsteils sowie CAD/CAM-Vorrichtung**
Method for manufacturing a dental restoration part and CAD/CAM device
Procédé de fabrication d'un élément de restauration dentaire et dispositif CAO/FAO

(43) Veröffentlichungstag der Anmeldung: 15.08.2012
(73) Patentinhaber: Ivoclar Vivadent AG, 9494 Schaan (LI)
(72) Erfinder: Laubersheimer, Jürgen, 9470 Buchs (CH); Murr, Wolfram, 7000 Chur (CH); Rohner, Gottfried, 9450 Altstätten (CH); Cavegn, Nadja Dr., 9492 Eschen (LI)
(74) Vertreter: Baronetzky, Klaus

(56) Entgegenhaltungen:
- US-A1- 2005 170 315
- US-A1- 2006 177 792
- US-A1- 2010 119 996
- US-A1- 2010 291 505
- US-B1- 6 208 813

## Beschreibung

Die Erfindung betrifft ein Verfahren zur Herstellung eines Dentalrestaurationsteils, gemäß dem Oberbegriff von Anspruch 1, sowie eine CAD/CAM-Vorrichtung, gemäß dem Oberbegriff von Anspruch 10.

Es ist seit längerem bekannt, dass Verfahren zur Herstellung von dentalen Restaurationsteilen dadurch verbessert werden können, dass die Chroma- und Helligkeitswerte von Nachbarzähnen zu dem zu restaurierenden Zahn bestimmt werden und gleichsam als Vorlage - auch hinsichtlich der lokalen Verteilung - für das dentale Restaurationsteil verwendet werden. Typischerweise werden Zähne in unterschiedlichen Zahnfarben hergestellt, wobei Farbmusterbezeichnungen oder "Zahnfarben" wie A2, B3 usw. üblich sind, die den Zahn sowohl hinsichtlich der Helligkeit als auch hinsichtlich der Grundfarbe grob festlegen.

Dokument US2005/0170315 offenbart ein Verfahren zur Herstellung eines dentalen Restaurationsteils, bei welchem Verfahren
- geometrische Daten der Lage und/oder des Volumens des Restaurationsteils, festgelegt und abgespeichert werden, um ein virtuelles Restaurationsteil zu bilden und
- das virtuelle Restaurationsteil unter Verwendung von Daten des zu ersetzenden Zahns und/oder wenigstens eines Nachbarzahns und/oder eines Zahnstumpfes für den zu ersetzenden Zahn bereitgestellt, als Farbdaten abgespeichert und verwendet werden, um das virtuelle Restaurationsteil rechnergestützt zu erzeugen.

Während herkömmlich ein optischer Vergleich über einen sogenannten Farbschlüssel vorgenommen wurde, wie es in einer neueren Veröffentlichung aus der DE 10 2007 035 610 A1 bekannt ist, ist es ebenfalls seit längerer Zeit bekannt, den Farbschlüssel dental zu realisieren und über ein digital aufgenommenes Bild des Nachbarzahns die Farbwahl zu verfeinern. Hierzu schlägt die EP 2 259 034 A1 vor, einen dentalen Farbschlüssel zu realisieren und die Zahnfarbe des Ersatzzahns mit elektronischer Unterstützung zu verbessern.

Es ist auch bereits vorgeschlagen worden, das erfasste Bild des Nachbarzahns weiter zu analysieren, indem es gerastert und in Ausschnitte aufgeteilt wird, deren einzelne Farb- und Helligkeitswerte bestimmt werden, um so die Verteilung der Farb- und Helligkeitswerte über den Zahn zu verbessern.

Gerade im Frontzahnbereich führen die bislang vorgeschlagenen Verfahren jedoch noch nicht zu optimalen Ergebnissen, und das Ergebnis hängt doch sehr von dem Geschick des meist hiermit betrauten Zahntechnikers ab, eine harmonische Farbgebung des Ersatzzahns, also des dentalen Restaurationsteils, festzulegen.

Demgegenüber liegt der Erfindung die Aufgabe zugrunde, ein Verfahren zur Herstellung eines dentalen Restaurationsteils, gemäß dem Oberbegriff von Anspruch 1 sowie eine CAD/CAM-Vorrichtung gemäß dem Oberbegriff von Anspruch 11 zu schaffen, die hinsichtlich des erzielten Ergebnisses, also hinsichtlich der Anpassung des dentalen Restaurationsteils an die Umgebung im Mund des Patienten weiter verbessert ist.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist die Anwendung des vorliegenden Verfahrens für Frontzähne, aber grundsätzlich kommt auch die Anwendung bei Molaren und insbesondere bei den Prämolaren in Frage.

Erfindungsgemäß ist es vorgesehen, das zu erzeugende virtuelle Restaurationsteil, insbesondere also einem Ersatzzahn, auch in der dritten Dimension zu der Zahnoberfläche festzulegen, in dem Daten der Nachbarzähne auch in der dritten Dimension erfasst werden. Mit dritter Dimension ist hier die Richtung senkrecht zur Zahnoberfläche gemeint.

Alternativ ist es auch möglich, ein dreidimensionales Koordinatensystem, mit einer X-, einer Y- und einer Z-Koordinate festzulegen. Die Y-Koordinate kann sich dann beispielsweise parallel zur Zahnachse erstrecken.

Die X-Achse erstreckt sich dann senkrecht zu dieser Y-Koordinate, nämlich etwa parallel zur Zahnoberfläche in horizontaler Richtung. Es versteht sich, dass in diesem Fall für jeden betrachteten Zahn die X-Koordinate etwas anders ausgerichtet ist. Die Z-Koordinate, entsprechend der vorstehend genannten Tiefe, erstreckt sich dann senkrecht zu der X- und zu der Y-Koordinate, also in der Ausrichtung labial-palatinal beim Oberkiefer beziehungsweise labial-lingual beim Unterkiefer.

In erfindungsgemäßer Weise ist es hierzu vorgesehen, stereometrisch Daten des Nachbarzahns oder der Nachbarzähne oder eines Zahnstumpfes des zu ersetzenden Zahns zu erzeugen und zu verwenden. Die Erzeugung von stereometrisch gewonnenen Daten lässt sich beispielsweise über zwei im Winkel zueinander angeordnete und auf den gleichen Zahn ausgerichtete Digitalkameras erzeugen, aber beispielsweise auch, indem eine einzige Digitalkamera in zwei verschiedenen Winkeln nacheinander Bilder erfasst. Die Erzeugung von stereometrischen Daten aus zwei Digitalbildern, die das gleiche Objekt aus zwei verschiedenen Perspektiven zeigen, ist natürlich an sich bekannt und wird erfindungsgemäss eingesetzt, um die Daten verwenden zu können.

Die so erzeugten Daten stellen ein dreidimensionales Abbild des aufgenommenen Zahns, des Nachbarzahns oder des Zahnstumpfs dar. Abgesehen von den fotografisch aufgenommenen Daten des Nachbarzahns oder des Zahnstumpfs kann auch ein "virtueller Zahn" verwendet werden, beispielsweise basierend auf einem bereits einmal erzeugten Dentalrestaurationsteil, das dann hinsichtlich der so festliegenden Daten verwendet wird, wobei es sich versteht, dass es auch möglich ist, die bestehenden Daten hinsichtlich beispielsweise der Zahnfarbe und/oder der Farbverteilung zu modifizieren.

In erfindungsgemäß vorteilhafter Ausgestaltung ist es auch möglich, die bestehenden Daten in der Z-Achse eines bereits erzeugten Dentalrestaurationsteils zu verwenden und sie zu kombinieren mit den zweidimensional erzeugten Daten eines Nachbarzahns oder des Zahnstumpfs des zu ersetzenden Zahns.

In vorteilhafter Ausgestaltung werden die beiden Nachbarzähne des zu ersetzenden Zahns verwendet und fotografisch erfasst.

Für die Erfassung der stereometrischen Daten ist es günstig, wenn die beiden Positionen, in denen die Bilder aufgenommen werden, sich lediglich in der X-Koordinate unterscheiden. Dies vereinfacht die Berechnung der stereometrisch gewonnenen Daten, da dann keine weitere Umrechnung der Daten hinsichtlich der Y-Koordinate erforderlich ist.

Um dies in der Praxis zu realisieren, ist es günstig, zunächst eine genaue Bezugsebene festzulegen, in der die Bilder aufgenommen werden. Die Bezugsebene muss sich auf den Kopf des Patienten beziehen, genauer gesagt, bei Unterkiefer-Restaurationen auf den Unterkiefer und bei Oberkiefer-Restaurationen auf den Oberkiefer. Um dies zu erleichtern ist es in günstiger Ausgestaltung möglich, einen Hilfspunkt im Mundbereich des Patienten zu markieren, oder ggf. eine horizontal, also in X-Richtung ausgerichtete Linie, die die Aufnahme der Bilder mit einer horizontalen Genauigkeit von weniger als 5 Prozent, beispielsweise etwa 1 Prozent, ermöglicht.

Basierend auf den stereometrisch gewonnenen dreidimensionalen Daten werden erfindungsgemäß dreidimensionale Ausschnitte erzeugt. Die Größe der Ausschnitte lässt sich in beliebiger Weise und in weiten Bereichen an die Erfordernisse anpassen. Die Kantenlänge in den drei Diemensionen kann unterschiedlich sein, aber jeder Ausschnitt kann auch würfelförmig sein, also gleiche Kantenlängen in allen drei Dimensionen aufweisen. Beispielsweise kann die Kantenlänge in X-Richtung ein Drittel bis ein Fünfzigstel der Zahnbreite des dentalen Restaurationsteils betragen, in Y-Richtung ein Viertel bis ein Fünfzigstel der Höhe des zu ersetzenden Zahns, und in Z-Richtung ein Drittel bis ein Zwanzigstel des zu ersetzenden Zahns.

Jeder Ausschnitt ist dementsprechend typischerweise quaderförmig und weist in sich die gleiche Zahnfarbe (A1, B2 usw.) auf. Hier sind die unter "Zahnfarbe" sowohl die Chromawerte als auch die Helligkeitswerte als auch die Transluzenzwerte des für die Restauration verwendeten Dentalmaterials zu verstehen.

Auch wenn dies nicht im einzelnen erläutert werden muss, versteht es sich, dass die erfindungsgemäße Bereitstellung eines dentalen Restaurationsteils sowohl über keramische Dentalmaterialien als auch über Kunststoff-Dentalmaterialien, oder über auch Hybrid-Dentalmaterialien, möglich ist, wobei es erfindungsgemäß bevorzugt ist, die Dentalmaterialien nach der Art eines Rapid-Prototyping-Verfahrens zu verwenden und den Ersatzzahn hierdurch aufzubauen.

In vorteilhafter Ausgestaltung ist es beispielsweise möglich, das Dentalrestaurationsteil durch ein Rapid-Prototyping-Verfahren schichtweise aufzubauen, aber es ist auch möglich, anstelle des schichtweisen Aufbaus über 3D-Plotting oder 3D-Printing eines der anderen möglichen Verfahren zu verwenden:
- Fused Deposition Modeling (FDM),
- Laminated Object Modeling (LOM),
- Ink-Jet Printing (IJP),
- selektives Laserschmelzen (SLM),
- selektives Lasersintern (SLS), oder über
- Stereolithographie (STL oder SLA)

Für die Durchführung des Rapid-Prototyping-Verfahrens ist es erforderlich, die Farbdaten, die dreidimensional vorliegen, aufzubereiten und in maschinenlesbare Daten umzuwandeln. Die Umwandlung ist besonders einfach, wenn die Koordinatenzuordnung zwischen der CAD-Realisierung, also der Bereitstellung der Farbdaten und der CAM-Vorrichtung, also der Vorrichtung zur Erzeugung des dentalen Restaurationsteils nach einem Rapid-Prototyping-Verfahren beibehalten wird, dass also der Ersatzzahn mit den gleichen Koordinaten wie bei der Aufnahme der Nachbarzähne erzeugt wird.

Erfindungsgemäß günstig ist es, die Auflösung der Daten an die erzeugten Ausschnitte aber auch an die CAM-Vorrichtung anzupassen. Für Ausschnitte in diesem Sinn hat sich der Begriff Voxel eingebürgert, so dass insofern isotrope Voxel vorliegen. Wenn beispielsweise ein 3D-Printing-Verfahren eingesetzt wird, kann dann die Tröpfchengröße der CAM-Vorrichtung die Größe der Ausschnitte festlegen.

Erfindungsgemäß ist es an sich vorgesehen, pro Ausschnitt die gleiche Zahnfarbe zu verwenden. Bei sehr großen Ausschnitten, wie beispielsweise einer Kantenlänge von einer halben Zahndicke in Z-Richtung, ist es aber auch möglich, einen der Parameter, beispielsweise die Transluzenz, in einer der Koordinaten, beispielsweise in Richtung der Z-Koordinate, mit einem Gradienten zu versehen, so dass oberflächennah die Transluzenz größer und im Zahninneren die Transluzenz geringer ist. Es versteht sich, dass dies nur dann möglich ist, wenn bei der Rapid-Prototyping-Aufbringung die Tröpfchengröße geringer als die Ausschnittgröße ist, so dass die so erwünschte Differenzierung auch umsetzbar ist.

Bevorzugt ist es jedoch, die Farbdaten-Parameter innerhalb des Ausschnitts konstant zu belassen.

Während des CAD-Schritts sind beliebige Einwirkungsmöglichkeiten seitens des Bedieners realisierbar. So lässt sich beispielsweise in an sich bekannter Weise das 3D-Modell des zu erzeugenden Zahns auf einem Bildschirm darstellen und im Raum verändern, also kippen, drehen und zoomen.

Auch können Parameter der Farbdaten der Ausschnitte in beliebiger Weise nach veränderbar sein. Dies kann vor dem Rendern geschehen, so dass beispielsweise in Anpassung an die Belichtungssituation bei der stereometrischen Aufnahme die Helligkeits- oder Chromawerte angepasst werden. Dies kann aber auch nach dem Rendern für eine Untermenge der erzeugten Voxel erfolgen, indem beispielsweise in Richtung der Z-Achse die Transluzenzwerte mit einem negativen Gradienten versehen werden, also die Transluzenz abgesenkt wird.

Erfindungsgemäß insofern ist es besonders günstig, wenn eine Datenbank besteht, die aus virtuell erzeugten oder real erzeugten Daten von Ersatzzähnen und echten Zähnen zusammengestellt ist. Menschliche Zähne weisen hinsichtlich der Parameter der Farbdaten eine gewisse Schwankungsbreite der Verteilung auf, und zwar sowohl hinsichtlich der Chromawerte, als auch der Helligkeitswerte als auch der Transluzenzwerte. Hier können schwerpunktmäßig die häufigst verteilten Farbdaten in die Datenbank aufgenommen werden, um eine Grundlage für die Anpassung der ermittelten Farbdaten an natürliche Zähne zu ermöglichen.

Es ist auch möglich, die Datenbank basierend auf einer Grobverteilung der Parameterwerte der Daten eines natürlichen Zahns bereitzustellen, also eine Voxel-Kantenlänge von beispielsweise einem Millimeter zugrundezulegen, und dieses Raster gleichsam als Grundlage zu verwenden, um die per CAD-Design zu erzeugenden Ausschnitte mit einer Kantenlänge von beispielsweise einem Zehntel mm leichter realisieren zu können.

Hierzu können dann kurzerhand zur Erzeugung der "Feinvoxel" die Daten benachbarter "Grobvoxel" erfasst werden und ein Gradient über die 10 "Feinvoxel" - betrachtet in einer Koordinatenrichtung - gelegt werden, um eine feinere Verteilung zu ermöglichen.

Erfindungsgemäß ist es vorgesehen, dass das erzeugte dreidimensionale Farbbild gerendert wird und auf der Anzeige das virtuelle Dentalrestaurationsteil simuliert wird und mit den Farbfotos des Nachbarzahns verglichen wird.

In erfindungsgemäß besonders günstiger Weise ist auch eine Art Rückkopplung bei der Erzeugung der virtuellen Daten für das dentale Restaurationsteil möglich:
Auf dem Bildschirm lässt sich während des CAD-Designs der zu erzeugende Zahn simulieren und darstellen. Wenn der Bildschirm hinsichtlich der Farbwiedergabe kalibriert ist, lässt sich dann das Erscheinungsbild des virtuellen Zahns mit dem Bild des Nachbarzahns vergleichen, um einen realistischen Eindruck zu gewinnen. Wenn das Ergebnis noch nicht befriedigend ist, lässt sich dann beispielsweise die Schichtdicke oder die Transluzenz anpassen, und es ist auch möglich, ein erneutes Randown vorzunehmen.
Ferner ist es auch möglich, die Schwindungswerte bei dem verwendeten CAM-Verfahren bereits rechnerisch vorab zu kompensieren. Sowohl beim Sintern von Keramik-Grünlingen als auch bei der Polymerisation von härtbaren Kunststoffmaterialien ist ein Schwindungsfaktor an sich bekannt, der vorab festlegbarer ist, und vorab korrigiert werden kann.

Um dies zu optimieren, ist es auch möglich, mit dem verwendeten Verfahren vorab einen Musterzahn zu erstellen, diesen dann zu sintern oder zu härten - sowie ggf. künstlich zu altern - und dann das Schwindungsmaß gegenüber den Ausgangsdaten zu bestimmen. Wenn sich dann herausstellt, dass die Schwindung in den drei Raumkoordinaten unterschiedlich ist, lässt sich auch dies erfindungsgemäß durch einfache Umrechnung zwischen der tatsächlich erzeugten Größe und der Zielgröße, die drei Schwindungsfaktoren in Richtung der drei Koordinaten vergeben, zu kompensieren.

In vorteilhafter Ausgestaltung ist es vorgesehen, dass bei der Festlegung der Dentalfarben wenigstens ein Ausschnitt oder eine Mehrzahl von Ausschnitten aus der Menge der dreidimensionalen Ausschnitten auf einem Bildschirm dargestellt und ausgewählt wird und die Oberflächenfarbe des ausgewählten Ausschnittes oder der ausgewählten Ausschnitte mit abgespeicherten Zahnfarben verglichen wird, welche Zahnfarben in einer Schichtungsdatenbank abgespeichert sind, wobei auf dem Bildschirm insbesondere die ermittelte Zahnfarbe, die Farben der einzelnen Schichtmaterialien, die Dicke der einzelnen Schichten, die Dicke des Schneidenmaterials und/oder die Transluzenz in Prozent räumlich zugeordnet zu dem betreffenden Ausschnitt dargestellt werden.

In vorteilhafter Ausgestaltung ist es vorgesehen, dass bei der Auswahl des oder der Ausschnitte eine Festlegung der Zahnfarben erfolgt, und dass durch Bestätigung auf dem Bildschirm die betreffende Zahnfarbe des oder der Ausschnitte in einer Arbeitstabelle abgespeichert werden, welche die Grundlage für die CAM-Herstellung des dentalen Restaurationsteils bildet.

In vorteilhafter Ausgestaltung ist es vorgesehen, dass die Farbdaten durch die Erstellung eines dreidimensionalen Farbfotos erzeugt werden, wobei mindestens zwei unterschiedliche Positionen von Kameras und/oder zwei Kameras aus unterschiedlichen Winkelpositionen ein Bild eines Nachbarzahns und/oder eines Zahnstumpfes für das dentale Restaurationsteil aufnehmen, welche Farbbilder stereometrisch überlagert werden, wodurch ein 3D-Bild erzeugt wird.

In vorteilhafter Ausgestaltung ist es weiter vorgesehen, dass die dreidimensionalen Ausschnitte in Schichten zusammengefasst werden und die Dicke der Schichten, die Transparenz sowie die Materialwahl nach optischem Vergleich mit dem Nachbarzahn angepasst wird und gegebenenfalls erneut gerendert wird.

In vorteilhafter Ausgestaltung ist es vorgesehen, dass die Größe der dreidimensionalen Ausschnitte und/oder die Dicke der Schichten um einen Korrekturfaktor vergrößert wird, der Erfahrungswerte bei der Verfestigung des Dentalmaterials und der dort auftretenden Schwindung berücksichtigt.

In vorteilhafter Ausgestaltung ist es vorgesehen, dass das Dentalmaterial zur Verfestigung mindestens teilweise polymerisierbar ist undpolymerisiert wird und insbesondere, dass bei Verwendung des Ink-Jet Printings als Rapid-Prototyping-Verfahren die Verfestigung durch Auskühlen erfolgt.

In vorteilhafter Ausgestaltung ist es vorgesehen, dass das Dentalmaterial in Form von Keramikgrünlingen bereitgestellt wird, die zur Verfestigung gesintert werden.

In vorteilhafter Ausgestaltung ist es vorgesehen, dass die Erzeugung des virtuellen Dentalrestaurationsteils unter Verwendung einer Datenbank erfolgt, in welcher verschiedene Zahnformen und/oder Zahnverläufe in dreidimensionaler abgespeicherter Form sind, basierend auf welchen die Schichten konstruiert werden.

In vorteilhafter Ausgestaltung ist es vorgesehen, dass die CAD/CAM-Vorrichtung für die Erzeugung eines dentalen Restaurationsteils basierend auf geometrischen Daten, welche die geometrische Form des zu erzeugenden Dentalrestaurationsteils festlegen, sowie basierend auf Farbdaten, die das zu erzeugende dentale Restaurationsteil kennzeichnen und entweder aus einer Zahndatenbank oder einem Nachbarzahn des zu erzeugenden dentalen Restaurationsteils und/oder dessen Zahnstumpf gewonnen werden, und dass die Vorrichtung die Farbdaten dreidimensional stereometrisch erfasst und die gewonnenen Farbdaten in einer Vielzahl einzelner, sich durch das Restaurationsteil erstreckender dreidimensionaler Ausschnitte aufteilt, sowie basierend hierauf Schichten aus Dentalmaterialien festlegt, aus denen das dentale Restaurationsteil hergestellt werden soll, und dass für den wenigstens einen Ausschnitt und/oder eine Mehrzahl von zusammengefassten Ausschnitten Zahnfarben (A1, B2 usw.) manuell oder automatisch festgelegt werden und in einer Arbeitstabelle abgespeichert werden, dass die Zahnfarben-Daten zu einer CAM-Vorrichtung übertragen und basierend hierauf schichtweise das dentale Restaurationsteil aufgebaut und hiernach verfestigt wird.

In vorteilhafter Ausgestaltung ist es vorgesehen, dass die Vorrichtung einen Bildschirm mit einem Cursor aufweist und die dreidimensionalen Ausschnitte auf dem Bildschirm darstellbar und auswählbar sind und dass basierend auf der Auswahl ein Vergleich der Oberflächenfarbe mit abgespeicherten Zahnfarben einer Schichtungsdatenbank vorgenommen wird und hierbei verschiedenen Parameter der Ausschnitte auf dem Bildschirm darstellbar sind und für die Bereitstellung der CAM-Daten bestätigbar sind.

In vorteilhafter Ausgestaltung ist es vorgesehen, dass die Vorrichtung eine Digitalkamera aufweist, die die Farbdaten in zwei Positionen erfasst, welche sich in horizontaler Richtung unterscheiden und in vertikaler Richtung auf der gleichen vertikalen Höhe sind, oder welche sich in vertikaler Richtung unterscheiden und in horizontaler Richtung an der gleichen Position sind.

In vorteilhafter Ausgestaltung ist es vorgesehen, dass die stereometrisch erfassten Farben in zwei Dimensionen durch aufgenommene Bilder und in der dritten Dimension, insbeson-dere in Richtung der Z-Koordinate, durch bereits vorhandene Daten, insbesondere eines bereits bestehenden dentalen Restaurationsteils, bereitstellbar sind.

Weitere Vorteile, Einzelheiten und Merkmale ergeben sich aus der nachfolgenden Beschreibung zweier Ausführungsbeispiele der Erfindung anhand der Zeichnung.

Es zeigen:
- Fig. 1: eine schematische dreidimensionale Darstellung eines virtuellen Ersatzzahns oder dentalen Restaurationsteils in einer Ausführungsform der Erfindung;
- Fig. 2: eine weitere Ausführungsform des virtuellen dentalen Restaurationsteils gemäß Fig. 1;
- Fig. 3: eine Darstellung eines Zwischenschritts des erfindungsgemäßen CAD/CAM-Verfahrens unter Einbeziehung eines zu hilfe genommenen Bildschirms und dessen Darstellung; und
- Fig. 4: eine schematische Darstellung der Anordnung zur Erfassung der stereometrischen Farbdaten von Nachbarzähnen.

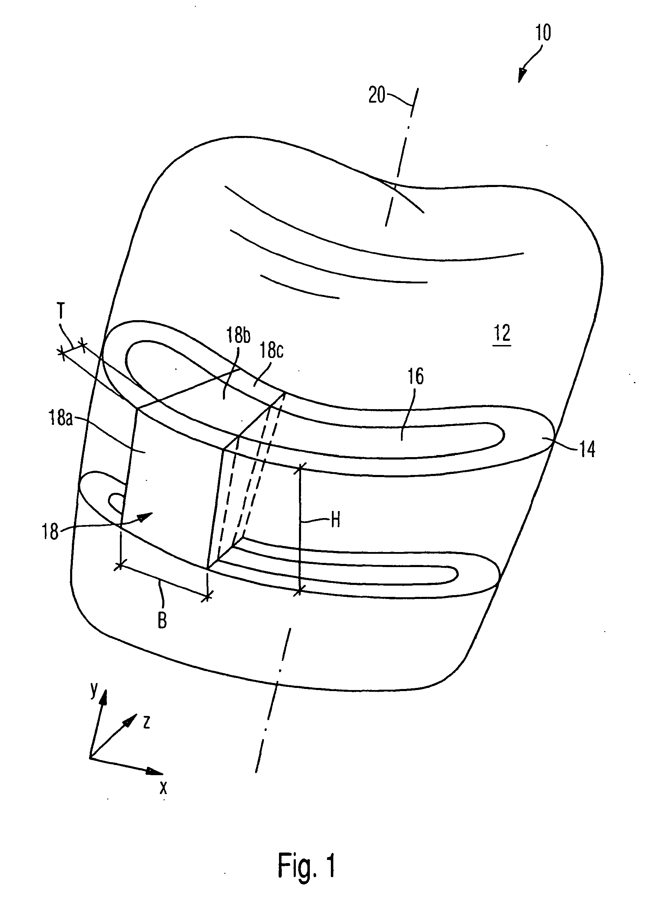

In der Darstellung gemäß Fig. 1 ist ein virtueller Zahn ersichtlich, der als dentales Restaurationsteil erzeugt worden ist und dann auf einem Bildschirm entsprechend dargestellt werden kann. Der Ersatzzahn 10 ist im dargestellten Ausführungsbeispiel als Schneidezahn ausgebildet, wobei in entsprechender Weise aber auch eine Realisierung bei einem Prämolaren oder sogar einem Molaren möglich ist.

In an sich bekannter Weise weist der Ersatzzahn 10 seiner Zahnoberfläche 12 benachbart den Enamelmaterial auf, das sich in einer Stärke im Millimeterbereich entlang der Zahnoberfläche 12 erstreckt.

In an sich bekannter Weise erstreckt sich innerhalb des Zahnschmelz- oder Enamelmaterials Dentinmaterial 16, wobei die Schichtstärke des Enamelmaterials 14 über ihren Verlauf, also sowohl in X-Richtung als auch in Y-Richtung, sich etwas ändert, jedoch nicht sehr stark.

Der so bestehende Aufbau des Ersatzzahns wird nun durch die Bestimmung von Ausschnitten 18 bereitgestellt, die der Deutlichkeit halber in Fig. 1 stark vergrößert dargestellt sind, in der Praxis jedoch wesentlich kleiner sind. Der Ausschnitt 18a ist im Bereich des Enamelmaterials 14 vorgesehen und erstreckt sich im wesentlichen quaderförmig mit einer Höhe H, die etwa das eineinhalbfache einer Breite B beträgt. Die Höhe H entspricht hier der Kantenlänge in Richtung der Y-Koordinate, und die Breite B entspricht hier der Kantenlänge des Ausschnitts 18a in Richtung der X-Koordinate.

Der Ausschnitt 18a hat auch eine Tiefe T, also eine Kantenlänge in Richtung der Z-Koordinate, die wiederum wesentlich kleiner als die Breite B ist, beispielsweise ein Drittel der Breite B beträgt.

Der Ausschnitt 18a ist hinsichtlich seiner Zahnfarbe festgelegt, und zwar basierend auf stereometrisch erfassten Daten der Nachbarzähne oder des Nachbarzahns.

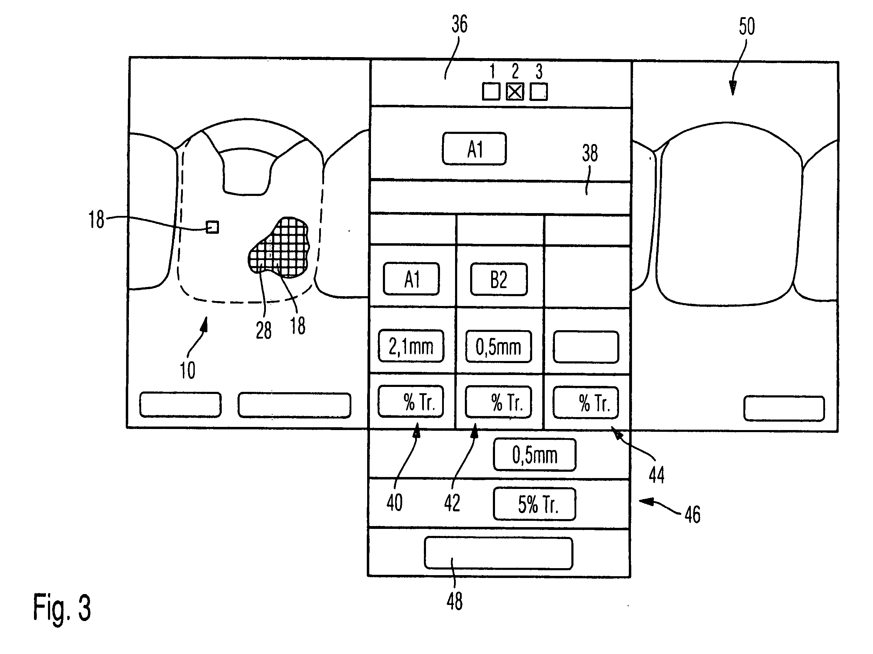

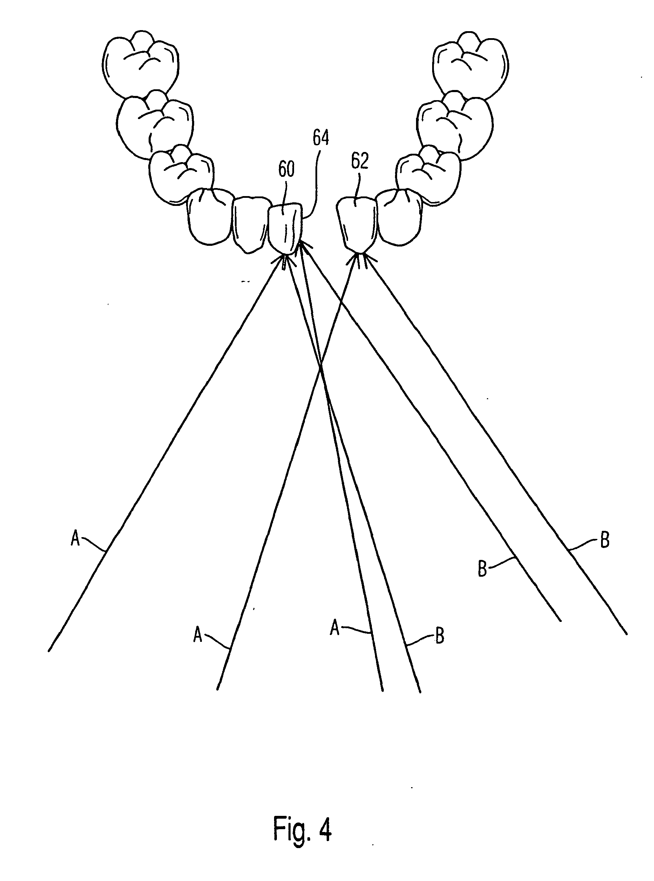

Für die Bereitstellung der Daten hinsichtlich der Zahnfarbe des Ausschnitts 18a wird ein stereometrisches Verfahren eingesetzt, das schematisch aus Fig. 4 ersichtlich ist. Anschließend an die Gewinnung der Daten erfolgt noch eine Anpassung über eine CAD-Vorrichtung, die anhand von Fig. 3 kurz beschrieben ist.

Jeder der Ausschnitte 18 ist hinsichtlich der Parameter der Zahnfarben festgelegt, also hinsichtlich seines Helligkeitswerts, seines Chromawerts und seines Transluzenzwerts. Vor der Herstellung des Ersatzzahns in der CAM-Vorrichtung wird er in entsprechender Weise auf einem Bildschirm der CAD-Vorrichtung dargestellt, vgl. Fig. 3.

Abgesehen von dem Ausschnitt 18a sind aus Fig. 1 noch weitere Ausschnitte 18b und 18c ersichtlich, wobei der Ausschnitt 18b sich im Bereich des Dentins erstreckt und der Ausschnitt 18c wiederum im Enamel-Bereich, dem Ausschnitt 18a, bezogen auf den Zahn 10, gegenüberliegend.

Es versteht sich, dass die Zahnfarben dieser drei Ausschnitte typischerweise unterschiedlich sind, und auch, dass typischerweise wesentlich mehr als lediglich drei Ausschnitte in einem entsprechend großen Bereich des Ersatzzahns 10 vorgesehen sind.

Die Ausschnitte erstrecken sich nach der Art von Voxeln dreidimensional durch den Ersatzzahn 10. In der Praxis können durchaus tausend, oder auch zehntausend Voxel pro Ersatzzahn 10 realisiert sein. Die Erstreckung der Ausschnitte 18 erfolgt je so, dass sie aneinander angrenzen. Einander benachbarte Ausschnitte sind hinsichtlich der Zahnfarben je voneinander getrennt ausgewählt, entsprechend dem gerenderten Ergebnis der stereometrischen Digitalaufnahmen der Nachbarzähne gemäß Fig. 4.

Durch die Erschließung der dritten Dimension, also der Z-Achse mit der erfindungsgemäßen stereometrischen Erfassung lässt sich die Tiefenwirkung der Ersatzzähne - gerade auch im Bereich des Enamel-Materials - stark verbessern und ist wesentlich naturnäher als dies mit den bislang bekannten Verfahren möglich war.

Basierend auf den erfassten stereometrischen Daten wird nun erfindungsgemäß eine Umwandlung in stereometrische Daten vorgenommen, also Daten in X-, Y- und Z-Richtung. Für jedes Voxel, also jeden Ausschnitt 18, werden die entsprechenden Parameter festgelegt, indem ein dreidimensionales Rendern erfolgt. Hierbei lässt sich die Ausschnittgröße und die Größenverteilung beim Rendern ggf. anpassen, auch wenn rechnerisch die einfachste Lösung darin besteht, mit gleichen Größen der einzelnen Voxeln zu arbeiten.

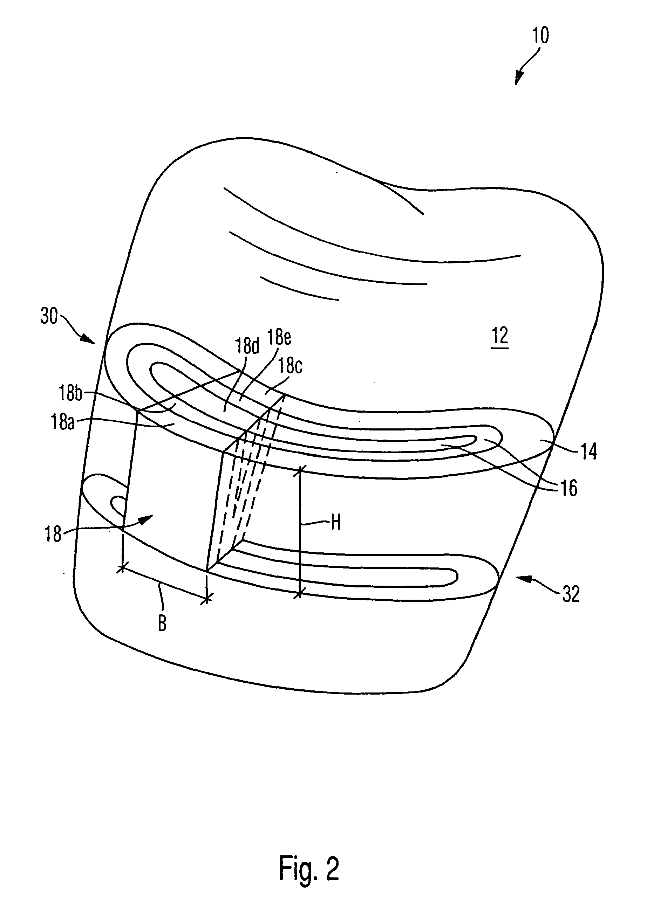

Während die Ausschnitte bei der Ausführungsform gemäß Fig. 1 im wesentlichen quaderförmig sind, ist dies bei der Ausgestaltung gemäß Fig. 2 nicht der Fall. Hier sind die Kantenlängen in Richtung der Tiefe, also in Richtung der Z-Koordinaten reduziert und da die Dentinschicht 16 eines Schneidezahns sich über seine Achse 20 des Zahns ändert, sind hier in einem oberen Bereich 30 des Zahns 10 mehr Ausschnitte vorgesehen als in einem unteren Bereich 32 des Ersatzzahns 10.

Dies ist schematisch durch den sich nach unten verjüngenden Ausschnitt 18d angedeutet. Tatsächlich ist - wie bereits vorstehend aufgeführt - die Anzahl der Ausschnitte wesentlich größer als in den Figuren dargestellt, und es wird zur Nachbildung der entsprechenden Abmessungsänderung in Richtung der Z-Koordinate beispielsweise die Anzahl der Ausschnitte von 20 auf 16 reduziert, betrachtet zwischen dem Bereich 30 und dem Bereich 32.

Eine Ausschnittverteilung, die der tatsächlichen Auflösung näher kommt, ist aus Fig. 3 im linken Teil des dort dargestellten Bildschirms ersichtlich. Der Ersatzzahn ist dort schematisch zur Realisierung des 3-D-Designs dargestellt, wobei es möglich ist, mit dem Cursor ein Feld 28 von Ausschnitten zu wählen, die dann gemeinsam behandelt werden können.

Anstelle dessen kann durch Cursoranwahl auch ein einziger Ausschnitt 18 festgelegt werden, wie es etwas weiter links in Fig. 3 im linken Bereich des Bildschirms dargestellt ist.

In an sich bekannterweise wird im mittleren Bereich die zunächst festgelegte Zahnfarbe - hier beispielsweise A1 - angezeigt, wenn der Cursor an dem betreffenden Ausschnitt ist.

In einem oberen Bedienfeld 36 des mittleren Bereichs des Bildschirms gemäß Fig. 3 ist eine Wahl der Schichtung möglich, um die Zahnfarben mehrerer Ausschnitte gleichzeitig beeinflussen zu können. Der Einfachheit halber sind hier lediglich 3 Schichten anwählbar, wobei es sich versteht, dass in der Praxis auch wesentlich mehr Schichten realisiert sein können.

In einem Bedienfeld 38 ist es möglich, eine Schichtungskorrektur vorzunehmen. Eine erste Schicht 1 ist in einer Spalte 40 behandelbar, eine zweite Schicht 2 in einer Spalte 42 und eine dritte Schicht 3 in einer Spalte 44. In der oberen Zeile lässt sich zunächst die Zahnfarbe A1, B2 usw. anzeigen und ändern, in einer zweiten Zeile die Dicke der Schicht, wie 2,1 mm für Schicht 1, 0,5 mm für Schicht 2 und kein festgelegter Wert für Schicht 3. Die Nicht-Festlegung der Stärke der Schicht 3 bedeutet insofern erfindungsgemäß, dass der Rest zur Gesamtstärke des Zahns in Z-Richtung dort aufgefüllt wird.

In der dritten Zeile lässt sich je in einem weiteren Feld in jeder Spalte die Transluzenz erfassen und ggf. ändern.

Unterhalb des mittleren Bereichs sind weitere Bedienfelder 46 vorgesehen, die die gemeinsame Beeinflussung der Schichten ermöglichen und diese proportional ändern, beispielsweise dort hinsichtlich der Transluzenz.

Über ein weiteres Bedienfeld 48 lässt sich dann auch ein Detail-Rendern des ausgewählten Bereichs vornehmen.

Das Ergebnis der Änderungen ist in einem rechten Bereich 50 des Bildschirms gemäß Fig. 3 dargestellt. Der Bildschirm lässt sich übrigens für die Bereitstellung der erwünschten CAD-Funktionen, also des 3D-Designs entweder als Touchscreen oder über einen mit einem Cursor bedienbaren Bildschirm ausgestalten.

In dem Bereich 50 ist der fertige Zahn in gerenderter Form dargestellt und das zu erwartende Ergebnis lässt sich so vorab, also vor der CAM-Herstellung, beurteilen. Hier ist auch ein wiederholtes Rendern mit unterschiedlich gewählten Parametern der Zahnfarbe möglich, aber auch mit unterschiedlichen Ausschnittgrößen und/oder Transluzenzwerten.

Aus Fig. 4 ist schematisch ersichtlich, in welcher Weise Nachbarzähne verwendet werden können, um die erwünschten Daten zu ermitteln. Für jeden Erfassungspunkt wird in an sich bekannter stereometrischer Weise aus unterschiedlichen Winkeln je eine Digitalaufnahme gemacht. Für jeden Punkt bestehen je die zwei Positionen A und B, die einen unterschiedlichen Winkel zu dem erfassenden Bereich des Zahns 60 bzw. 62 bilden. Auch wenn hier die Erfassung lediglich der Oberfläche des betreffenden Zahns 60 dargestellt ist, versteht es sich, dass tatsächlich aufgrund der Tranzluzenz gerade der Enamel-Masse des Nachbarzahns 60 tatsächlich die Tiefenwirkung durch die stereometrische Aufnahme erfasst wird und erfindungsgemäß ausgenutzt wird, um die dritte Dimension bei der Herstellung der Dentalrestauration bereitzustellen.

Erfindungsgemäß ist es auch günstig, dass auch ein etwas weiter palatinal sich erstreckender Bereich 64 des Nachbarzahns 60 durch Ausnützen der Zahnlücke erfassbar ist, so dass insofern auch die rückwärtigen Bereiche des betreffenden Schneidezahns erfasst und für die neue Herstellung des Ersatzzahns verwendet werden können.

## Patentansprüche

1. Verfahren zur Herstellung eines dentalen Restaurationsteils,
bei welchem Verfahren geometrische Daten, insbesondere Daten hinsichtlich der räumlichen Abmessungen, der Lage und/oder des Volumens des Restaurationsteils, festgelegt und abgespeichert werden, um ein virtuelles Restaurationsteil zu bilden,
bei welchem Verfahrensschritt das virtuelle Restaurationsteil unter Verwendung von Daten des zu ersetzenden Zahns (10) und/oder wenigstens eines Nachbarzahns (60) und/oder eines Zahnstumpfes für den zu ersetzenden Zahn (10) bereitgestellt, als Farbdaten abgespeichert und
verwendet werden, um das virtuelle Restaurationsteil rechnergestützt zu erzeugen,
wobei die Daten für die Erzeugung des virtuellen Restaurationsteils aus den geometrischen Daten unter Verwendung der vorstehend genannten Farbdaten erzeugt werden,
**dadurch gekennzeichnet,**
- **dass** die Farbdaten als dreidimensionale, stereometrisch gewonnene Daten für den zu ersetzenden Zahn (10) basieren auf wenigstens einem Nachbarzahn (60) erzeugt werden und in eine Vielzahl einzelner, sich durch das virtuelle Restaurationsteil erstreckender, dreidimensionaler Ausschnitte (18) aufgeteilt werden,
- **dass** anschließend hieran die Unterschiede der Ausschnitte (18) hinsichtlich einzelner Farbparameter bestimmt und den zu verwendenden Zahnfarben (A1, B2) zugeordnet werden,
- **dass** diese Zahnfarbendaten aufbereitet und abgespeichert sowie in maschinenlesbare Daten für die Herstellung des Dentalrestaurationsteils umgewandelt werden, und
- **dass** diese maschinenlesbaren Daten zu einer CAM-Vorrichtung, insbesondere nach dem Rapid-Prototyping-Verfahren, übertragen und über diese insbesondere schichtweise das farblich angepasste Dentalrestaurationsteil aufgebaut wird, indem Dentalmaterial unterschiedlicher Zahnfarben verwendet wird, welches anschließend hieran verfestigt wird, und
- **dass** ein erzeugtes dreidimensionale Farbbild gerendert wird und auf einer Anzeige das virtuelle Dentalrestaurationsteil simuliert wird und mit Farbfotos eines Nachbarzahns verglichen wird.

2. Verfahren nach Anspruch 1, **dadurch gekennzeichnet, dass** bei der Festlegung der Dentalfarben wenigstens ein Ausschnitt (18) oder eine Mehrzahl von Ausschnitten aus der Menge der dreidimensionalen Ausschnitten auf einem Bildschirm dargestellt und ausgewählt wird und
die Oberflächenfarbe des ausgewählten Ausschnittes (18) oder der ausgewählten Ausschnitte mit abgespeicherten Zahnfarben verglichen wird, welche Zahnfarben in einer Schichtungsdatenbank abgespeichert sind,
wobei auf dem Bildschirm insbesondere die ermittelte Zahnfarbe, die Farben der einzelnen Schichtmaterialien, die Dicke der einzelnen Schichten, die Dicke des Schneidenmaterials und/oder die Transluzenz in Prozent räumlich zugeordnet zu dem betreffenden Ausschnitt dargestellt werden.

3. Verfahren nach Anspruch 2, **dadurch gekennzeichnet, dass** bei der Auswahl des oder der Ausschnitte eine Festlegung der Zahnfarben erfolgt, und dass durch Bestätigung auf dem Bildschirm die betreffende Zahnfarbe des oder der Ausschnitte in einer Arbeitstabelle abgespeichert werden, welche die Grundlage für die CAM-Herstellung des dentalen Restaurationsteils bildet.

4. Verfahren nach einem der vorhergehenden Ansprüche, **dadurch gekennzeichnet, dass** die Farbdaten durch die Erstellung eines dreidimensionalen Farbfotos erzeugt werden, wobei mindestens zwei unterschiedliche Positionen von Kameras und/oder zwei Kameras aus unterschiedlichen Winkelpositionen ein Bild eines Nachbarzahns (60) und/ oder eines Zahnstumpfes für das dentale Restaurationsteil aufnehmen, welche Farbbilder stereometrisch überlagert werden, wodurch ein 3D-Bild erzeugt wird.

5. Verfahren nach einem der vorhergehenden Ansprüche, **dadurch gekennzeichnet, dass** die dreidimensionalen Ausschnitte (18) in Schichten zusammengefasst werden und die Dicke der Schichten, die Transparenz sowie die Materialwahl nach optischem Vergleich mit dem Nachbarzahn (60) angepasst wird und gegebenenfalls erneut gerendert wird.

6. Verfahren nach einem der vorhergehenden Ansprüche, **dadurch gekennzeichnet, dass** die Größe der dreidimensionalen Ausschnitte (18) und/oder die Dicke der Schichten um einen Korrekturfaktor vergrößert wird, der Erfahrungswerte bei der Verfestigung des Dentalmaterials und der dort auftretenden Schwindung berücksichtigt.

7. Verfahren nach einem der vorhergehenden Ansprüche, **dadurch gekennzeichnet, dass** das Dentalmaterial zur Verfestigung mindestens teilweise polymerisierbar ist und polymerisiert wird und insbesondere, dass bei Verwendung des Ink-Jet Printings als Rapid-Prototyping-Verfahren die Verfestigung durch Auskühlen erfolgt.

8. Verfahren nach einem der Ansprüche 1 bis 6, **dadurch gekennzeichnet, dass** das Dentalmaterial in Form von Keramikgrünlingen bereitgestellt wird, die zur Verfestigung gesintert werden.

9. Verfahren nach einem der Ansprüche 2 bis 8, **dadurch gekennzeichnet, dass** die Erzeugung des virtuellen Dentalrestaurationsteils unter Verwendung einer Datenbank erfolgt, in welcher verschiedene Zahnformen und/oder Zahnverläufe in dreidimensionaler abgespeicherter Form sind, basierend auf welchen die Schichten konstruiert werden.

10. CAD/CAM-Vorrichtung für die Erzeugung eines dentalen Restaurationsteils basierend auf geometrischen Daten,
welche die geometrische Form des zu erzeugenden Dentalrestaurationsteils festlegen, sowie basierend auf Farbdaten, die das zu erzeugende dentale Restaurationsteil kennzeichnen und die Farbdaten des zu erzeugenden dental Restaurationsteils aus wenigstens einem Nachbarzahn (60) gewonnen werden,
**dadurch gekennzeichnet,**
- **dass** die Vorrichtung die Farbdaten dreidimensional stereometrisch erfasst und die gewonnenen Farbdaten in einer Vielzahl einzelner, sich durch das Restaurationsteil erstreckender dreidimensionaler Ausschnitte (18) aufteilt, sowie basierend hierauf Schichten aus Dentalmaterialien festlegt, aus denen das dentale Restaurationsteil hergestellt werden soll, und
- **dass** für den wenigstens einen Ausschnitt und/oder eine Mehrzahl von zusammengefassten Ausschnitten Zahnfarben (A1,B2) manuell oder automatisch festgelegt werden und in einer Arbeitstabelle abgespeichert werden,
- **dass** die Zahnfarben-Daten zu einer CAM-Vorrichtung übertragen und basierend hierauf schichtweise das dentale Restaurationsteil aufgebaut und hiernach verfestigt wird und
- **dass** ein Bildschirm vorgesehen ist, auf dem das virtuelle Dentalrestaurationsteil als dreidimensionale Farbbild simuliert wird, sodass es mit Farbfotos eines Nachbarzahns (60) verglichen werden kann.

11. CAD/CAM-Vorrichtung nach Anspruch 10, **dadurch gekennzeichnet, dass** die Vorrichtung einen Bildschirm mit einem Cursor aufweist und die dreidimensionalen Ausschnitte (18) auf dem Bildschirm darstellbar und auswählbar sind und dass basierend auf der Auswahl ein Vergleich der Oberflächenfarbe mit abgespeicherten Zahnfarben einer Schichtungsdatenbank vorgenommen wird und hierbei verschiedenen Parameter der Ausschnitte auf dem Bildschirm darstellbar sind und für die Bereitstellung der CAM-Daten bestätigbar sind.

12. CAD/CAM-Vorrichtung nach Anspruch 10 oder 11, **dadurch gekennzeichnet, dass** die Vorrichtung eine Digitalkamera aufweist, die die Farbdaten in zwei Positionen erfasst, welche sich in horizontaler Richtung unterscheiden und in vertikaler Richtung auf der gleichen vertikalen Höhe sind, oder welche sich in vertikaler Richtung unterscheiden und in horizontaler Richtung an der gleichen Position sind.

13. CAD/CAM-Vorrichtung nach einem der Ansprüche 10 bis 12, **dadurch gekennzeichnet, dass** die stereometrisch erfassten Farben in zwei Dimensionen durch aufgenommene Bilder und in der dritten Dimension, insbesondere in Richtung der Z-Koordinate, durch bereits vorhandene Daten, insbesondere eines bereits bestehenden dentalen Restaurationsteils, bereitstellbar sind.

## Claims

1. A method for producing a dental restoration part,
in which method geometrical data, in particular data with respect to spatial dimensions, position and/or volume of the restoration part, is determined and stored in order to form a virtual restoration part,
in which process step the virtual restoration part is provided for the the tooth (10) to be replaced by using data of the tooth (10) to be replaced and/or at least one neighboring tooth (60) and/or a tooth stump, said data being stored as color data and used for the computer-assisted production of the virtual restoration part,
wherein said data for the production of the virtual restoration part is produced from the geometrical data by using the above-mentioned color data, **characterized in that**
the color data is generated as three-dimensional, stereometrically collected data for the tooth (10) to be replaced based on at least one neighboring tooth (60) and is divided into a plurality of individual, three-dimensional sections (18) extending through the virtual restoration part,
subsequently, the differences of the sections (18) with respect to individual color parameters are determined and are allocated to the tooth colors (A1, B2) that are to be used,
said tooth color data is conditioned and stored as well as converted into machine-readable data for the production of the dental restoration part, and
said machine-readable data is transferred to a CAM device, in particular according to the Rapid-Prototyping Process, and by means of which the color-adjusted dental restoration part is built up in particular in layers by using dental material of different tooth colors which is subsequently cured, and
a produced three-dimensional color picture is rendered and the virtual dental restoration part is simulated on a display and is compared with color pictures of a neighboring tooth.

2. The method as claimed in claim 1, **characterized in that** upon determination of the dental colors at least one section (18) oar a plurality of sections from the set of three-dimensional sections is displayed on a screen and is selected, and
the surface color of the selected section (18) or of the selected sections is compared to stored tooth colors that are stored in a layering database,
wherein on said screen in particular the tooth color detected, the colors of the individual layer materials, the thickness of the individual layers, the thickness of the incisal material and/or the translucency in percent are represented in a spatially associated manner with respect to the respective section.

3. The method as claimed in claim 2, **characterized in that** a determination of the tooth colors is performed when selecting the one or more sections, and that the respective tooth color of the one or more sections is stored in a work table by confirming on the screen, said work table forming the base for the CAM production of the dental restoration part.

4. The method as claimed in one of the preceding claims, **characterized in that** the color data is produced by creating a three-dimensional color photograph, wherein at least two different positions of cameras and/or two cameras from different angular positions take a picture of a neighboring tooth (60) and/or a tooth stump for the dental restoration part, which color pictures are stereometrically superimposed thereby creating a 3D image.

5. The method as claimed in one of the preceding claims, **characterized in that** the three-dimensional sections (18) are united in layers and the thickness of the layers, the transparency thereof and the material selection is adjusted after optical comparison with the neighboring tooth (60), and is rendered again, if necessary.

6. The method as claimed in one of the preceding claims, **characterized in that** the size of the three-dimensional sections (18) and/or the thickness of the layers is enlarged by one correction factor that takes into account empirical values during the solidification of the dental material and the shrinkage arising at this position.

7. The method as claimed in one of the preceding claims, **characterized in that** the dental material that is used for solidification, is at least partially polymerizable and is polymerized, and in particular that in the case of using the Ink-Jet-Printing as a Rapid-Prototyping Process, the solidification takes place through cooling down.

8. The method as claimed in one of the claims 1 to 6, **characterized in that** the dental material is provided in the form of ceramic green bodies that are sintered for solidification.

9. The method as claimed in one of the claims 2 to 8, **characterized in that** the production of the virtual dental restoration part is performed by using a data base in which different tooth shapes and/or tooth contours are presented in a three-dimensionally stored form, based upon which the layers are configured.

10. CAD/CAM device for the production of a dental restoration part based on geometrical data
which determines the geometrical shape of the dental restoration part to be produced, and based on color data that characterizes the dental restoration part to be produced, and wherein the color data of the dental restoration part to be produced is collected by at least one neighboring tooth (60),
**characterized in that**
the device stereometrically detects the color data three-dimensionally and divides the color data collected into a plurality of individual, three-dimensional sections (18) extending through the restoration part, and the device based thereon determines layers of dental material from which the dental restoration part is to be produced, and
for the at least one section and/or a plurality of united sections tooth colors (A1, B2) are determined manually or automatically and are stored in a work table,
the tooth color data is transferred to a CAM device and based thereon the dental restoration part is built up in layers and is subsequently cured, and
a screen is provided on which the virtual dental restoration part Is simulated as a three-dimensional color picture such that it can be compared with color photographs of a neighboring tooth (60).

11. The CAD/CAM device as claimed in claim 10, **characterized in that** the device comprises a screen with a cursor and the three-dimensional sections (18) may be represented on the screen and may be selected, and **in that** based on the selection a comparison of the surface color with stored tooth colors of a layering data base is effected and thereby different parameters of the sections may be represented on the screen and may be confirmed for providing the CAM data.

12. CAD/CAM device as claimed in claims 10 or 11, **characterized in that** the device comprises a digital camera that detects the color data at two positions, said positions differing from each other in the horizontal direction and being located at the same vertical height in the vertical direction, or differing in the vertical direction and being located at the same position in the horizontal direction.

13. CAD/CAM device as claimed in one of the claims 10 to 12, **characterized in that** the stereornetrically detected colors may be provided in two dimensions with the aid of taken pictures, and in the third dimension, in particular in the direction of the Z-coordinate, with the aid of already existing data, in particular with the aid of an already existing dental restoration part.

## Revendications

1. Procédé pour la fabrication d'un pièce destinée à la restauration dentaire, dans lequel sont spécifiées et sauvegardées des données géométriques, en particulier des données concernant les dimensions spatiales, l'emplacement et/ou le volume de la pièce destinée à la restauration, pour former une pièce virtuelle destinée à la restauration,
où à l'aide de données concernant la dent à remplacer (10) et/ou au moins une dent voisine (60) et/ou un moignon de dent pour la dent à être remplacée (10) la pièce virtuelle destinée la restauration est préparée, sauvegardées comme données de teintes, et utilisée afin de créer la pièce virtuelle destinée a la restauration,
où les données pour la production de la pièce virtuelle destinée à la restauration sont produites à partir des données géométriques en utilisant les données de teinte mentionnées précédemment, **caractérisé en ce que**
- les données de teinte sont générées comme données tridimensionnelles, recueillies de façon stéréométrique pour la dent à remplacer (10) basées sur au moins une dent voisine (60) et découpées en multiples fragments individuels tridimensionnels (18), s'étendant à travers I la pièce virtuelle destinée à la restauration,
- par la suite les différences les fragments (18) en ce qui concerne les paramètres de teintes individuelles sont déterminées et assignées aux teintes à utiliser (A1, B2),
- ces données de teinte de dent sont préparées, sauvegardées et converties en données lisibles par machine pour la fabrication des pièces destinées à la restauration dentaire, et
- ces données lisibles par machine sont transférées vers un dispositif FAO, en particulier selon le processus de prototypage rapide, et à travers celui-ci la pièce destinée à la restauration dentaire, adaptée dans sa teinte, est construite surtout en couches par l'utilisation de matériau dentaire de teintes différentes, qui seront par la suite solidifiées, et
- qu'une image tridimensionnel générée est restituée et la pièce virtuelle destinée à la restauration dentaire est simulée sur un écran et comparée avec des photos en couleur d'une dent voisine.

2. Procédé selon là'revendication 1, **caractérisé en ce que** lors de la détermination des teintes dentaires au moins fun fragment (18) ou une pluralité
de fragments est représenté et sélection à l'écran parmi ta totalité des fragments tridimensionnels, et
la teinte de surface du fragment (18) ou des fragments sélectionnés est comparée aux teintes enregistrées, ces teintes étant stockées dans une base de données stratifiée,
où à l'écran en particulier la teinte de dent détérminée, les teintes des matériels en couche individuels, l'épaisseur des différentes couches, l'épaisseur du matériau de coupe et/ou la translucidité sont représentées en pourcentages associées dans l'espace au fragment concerné.

3. Procédé selon la revendication 2, **caractérisé en ce que** lors de la sélection d'un de des fragments la définition des teintes de dent s'ensuit, et que par une confirmation à l'écran la teinte de dent du ou des fragments respectivement sont sauvegardées dan un tableau de travail, qui forme la base pour la fabrication en FAO de la pièce destinée à la restauration dentaire.

4. Procédé selon l'une des revendications précédentes, **caractérisé en ce que** les données de teinte sont créées par la création de photos en couleur tridimensionnelles, en utilisant au moins deux positions différentes de caméras et/ou de deux caméras à partir de deux différents angles pour faire une photo d'une dent voisine (60) et/ou d'un moignon de dent pour la pièce destinée à la restauration dentaire lesdites images en couleur étant superposés de façon stéréométrique, afin de créer une image en 3D.

5. Procédé selon l'une des revendications précédentes, **caractérisé en ce que** les fragments tridimensionnels (18) sont regroupés en couches et l'épaisseur des couches, la transparence et le choix de matériau après comparaison ontique avec la dent voisine (60) est ajustée et, si nécessaire, rendu à nouveau.

6. Procédure après l'une des revendications précédentes, **caractérisé en ce que** la taille des fragments tridimensionnels (18) ou l'épaisseur des couches sont augmentées par un facteur de correction, qui tient compte des valeurs de l'expérience de durcissement du matériel dentaire et du rétrécissement qui survirent.

7. Procédé selon une des revendications précédentes, **caractérisé en ce que** le matériel dentaire afin de durcir est au moins partiellement polymérisable et sera polymérisé et, en particulier, que lors de l'utilisation de l'impression à jet d'encre comme procédure de protolypage rapide le durcissement s'effectue par refroidissement.

8. Procédé selon l'une des revendications 1 à 6, **caractérisé en ce que** le matériel dentaire est préparé sous forme d'ébauches céramiques, qui sont frittés afin de durcir.

9. Processus selon l'une des revendications 2 à 9, **caractérisé en ce que** la génération de pièce virtuelle destinée à la restauration dentaire se fait à l'aide d'une base de données, dans laquelle différentes formes de dents et/ou de contours dentaires sont sauvegardées dans une forme tridimensionnelle, à la base de laquelle sont construites les couches.

10. Dispositif de CFAO pour générer une pièce destinée à la restauration dentaire, d'après des.données géométriques, qui définissent la forme géométrique de la pièce destinée à la restauration dentaire à produire, ainsi que d'après des données de teinte, qui caractérisent la pièce destinée à la restauration dentaire à produire, et les données de teinte de la piècé destinée à la restauration dentaire proviennent d'au moins une dent adjacente (60),
**caractérisée en ce que**
- le dispositif recueille de façon tridimensionnelle et stéréométrique des données de teinte et les données de teinte recueillies se divisent en une pluralité dé fragments (18) individuels tridimensionnelles, qui s'étendent à travers la pièce destinée à la restauration ainsi que basé sur ceux-ci détermine des couches de matériau dentaire à partir desquelles la pièce destinée à la restauration dentaire devrait être produite, et
- pour le au moins un fragment et/ou une pluralité de fragments de dent, des teintes de dent (A1, B2) sont spécifiées de façon manuelle ou automatique et sauvegardées dans un tableau de travail,
- les données de teinte de dent sont transférées vers un dispositif de FAO et sur cette base la pièce destinée à la restauration dentaire est construite en couches et solidifié et
- qu'un écran est prévu, sur lequel la pièce virtuelle destinée à la restauration dentaire est simulée comme image en couleur tridimensionnelle, afin de pouvoir être comparée à ia des photos en couleur d'une dent voisine (60).

11. Dispositif de CFAO selon la revendication 10, **caractérisé en ce que** le dispositif dispose d'un écran avec un curseur et les fragments tridimensionnelles (18) sont affichées à l'écran et peuvent être sélectionnées et que, basée sur la sélection, une comparaison de la teinte de surface avec des teintes sauvegardées dans une base de données stratifiée est réalisée, et divers paramètres des fragments peuvent être affichées à l'écran et sont confirmables pour la mise à disposition des données FAO.

12. Dispositif de CFAO selon l'une quelconque des revendications 10 ou 11, **caractérisé en ce que** le dispositif dispose d'une caméra numérique qui capture les données de teinte en deux positions, qui diffèrent dans le sens horizontal et dans le sens vertical sont à la même hauteur verticale, ou qui diffèrent dans le sens vertical et dans le sens horizontal sont dans la même position.

13. Dispositif de CFAO selon l'une des revendications 10 et 12, **caractérisé en ce que** les teintes capturées de façon stéréométrique sont préparées en deux dimensions par le biais de photos prises et en la troisième dimension, en particulier vers les coordonnées Z, par des données préexistantes, en particulier provenant d'une pièce de restauration dentaire déjà existante.
